# EUROPEAN PATENT SPECIFICATION

(11) **EP 3 795 947 B1**
(45) Date of publication and mention of the grant of the patent: **25.01.2023**
(21) Application number: 20195253.8
(22) Date of filing: 09.09.2020
(51) Int. Cl.: G01C 15/02, G01S 17/08, G06F 3/01

(54) **SURVEY SYSTEM AND SURVEY METHOD USING EYEWEAR DEVICE**
VERMESSUNGSSYSTEM UND VERMESSUNGSVERFAHREN UNTER VERWENDUNG EINER BRILLENVORRICHTUNG
SYSTÈME D'INSPECTION ET PROCÉDÉ D'INSPECTION UTILISANT UN DISPOSITIF DE LUNETTES

(30) Priority: 18.09.2019 JP 2019168967
(43) Date of publication of application: 24.03.2021
(73) Proprietor: Topcon Corporation, Tokyo 174-8580 (JP)
(72) Inventor: KIKUCHI, Takeshi, Tokyo 174-8580 (JP)
(74) Representative: dompatent von Kreisler Selting Werner - Partnerschaft von Patent- und Rechtsanwälten mbB

(56) References cited:
- EP-A1- 3 246 660
- US-A1- 2014 226 002
- HAFFEGEE ADRIAN ET AL: "Eye Tracking and Gaze Based Interaction within Immersive Virtual Environments", 25 May 2009 (2009-05-25), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047458661, ISBN: 978-3-642-17318-9 * section 3; figure 1 *

## Description

### [Technical Field]

The present invention relates to a survey system and a survey method using an eyewear device.

### [Background Art]

Conventionally, in order to measure a distance and an angle to a target, it has been a common practice for a measurement operator to look into a window hole of a telescope of a surveying instrument and perform collimation by visual observation. On the other hand, Patent Literature 1 discloses a surveying instrument in which an image near the target is projected on a display unit of the surveying instrument and the collimation direction is determined by touching the target on the display unit.

Patent Literature 2 describes a survey system combining an eyewear device having the features defined within the preamble of claim 1.

### [Citation List]

### [Patent Literature]

[Patent Literature 1] International Publication No. WO 2016/063419
[Patent Literature 2] European Patent Application 3 246 660.

### [Summary of Invention]

### [Technical Problem]

According to the surveying instrument of Patent Literature 1, the burden of visually observing the target through the window hole of the telescope is reduced, however, it has been necessary for, to search for the target and perform operation, the measurement operator to bend down to the height of the display unit located at a slightly lower position.

The present invention was made in view of this problem, and an object thereof is to further reduce the burden of operation on a measurement operator by making it possible to perform operations and confirmation at an arbitrary position distant from the surveying instrument and in an arbitrary posture.

Eye-wear targeting devices used in conjunction with a surveying system are known in the field, as for example disclosed in Patent Literature 2.

### [Solution to Problem]

In order to achieve the object described above, a survey system according to claim 1 is described.

In the aspect described above, it is also preferable that the control unit of the eyewear device includes at least a lock switch to be operated when the measurement operator wants to lock on to the target, a release switch to be operated when the measurement operator wants to release the target, and a zoom switch to be operated when the measurement operator wants to zoom in near the target.

In the aspect described above, it is also preferable that the eyewear device is operated by a mobile communication device including at least a lock switch to be operated when the measurement operator wants to lock on to the target, a release switch to be operated when the measurement operator wants to release the target, and a zoom switch to be operated when the measurement operator wants to zoom in near the target.

In the aspect described above, it is also preferable that the eyewear device further includes a blink detection camera.

In the aspect described above, it is also preferable that the display of the eyewear device further includes a display for the right eye and a display for the left eye.

A survey method according to claim 6 is described.

In the aspect described above, it is also preferable that the eyewear device stops the image of the image pickup unit when the measurement operator locks on to the target, updates the image of the image pickup unit when the measurement operator releases the target, and changes the scaling factor of the image pickup unit when the measurement operator zooms in near the target.

### [Effect of Invention]

According to a survey system and a survey method of the present invention, the burden of operation on a measurement operator is further reduced by making it possible to perform operations and confirmation at an arbitrary position distant from the surveying instrument and in an arbitrary posture.

### [Brief Description of Drawings]

FIG. 1 is an external perspective view of a survey system according to an embodiment.
FIG. 2 is a configuration block diagram of a surveying instrument according to the embodiment.
FIG. 3 is an external perspective view of an eyewear device according to the embodiment.
FIG. 4 is a configuration block diagram of the same eyewear device.
FIG. 5 is a measurement flowchart by the survey system according to the embodiment.
FIG. 6 is an imaginary view of a measurement by the same survey system.
FIG. 7 is an external perspective view of an eyewear device according to Modification 1.
FIG. 8 is an external perspective view of an eyewear device according to Modification 2.
FIG. 9 is an external perspective view of an eyewear device according to Modification 3.
FIG. 10 is an external perspective view of an eyewear device according to Modification 4.

### [Description of Embodiments]

Next, a preferred embodiment of the present invention is described with reference to the drawings.

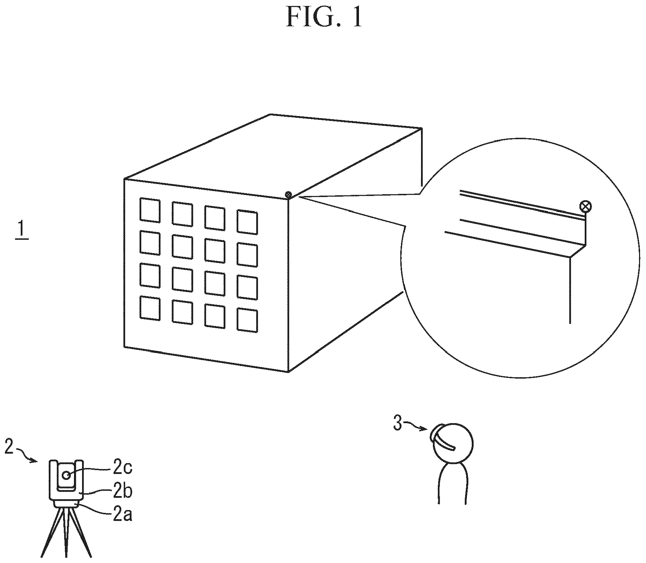

FIG. 1 is an external perspective view of a survey system 1 according to an embodiment, and illustrates an image of a survey site. The survey system 1 according to the embodiment includes a surveying instrument 2 and an eyewear device 3.

As illustrated in FIG. 1, the surveying instrument 2 is installed at a known point by using a tripod. The surveying instrument 2 includes a base portion 2a provided on a leveling device, a bracket portion 2b that rotates horizontally on the base portion, and a telescope 2c that rotates vertically at the center of the bracket portion 2b. The eyewear device 3 is worn on the head of a measurement operator.

In the survey system 1, a view observed by the eyewear device 3 is fed back to the surveying instrument 2, and a position of a visual line of the measurement operator is automatically measured by the surveying instrument 2. Hereinafter, detailed description is given.

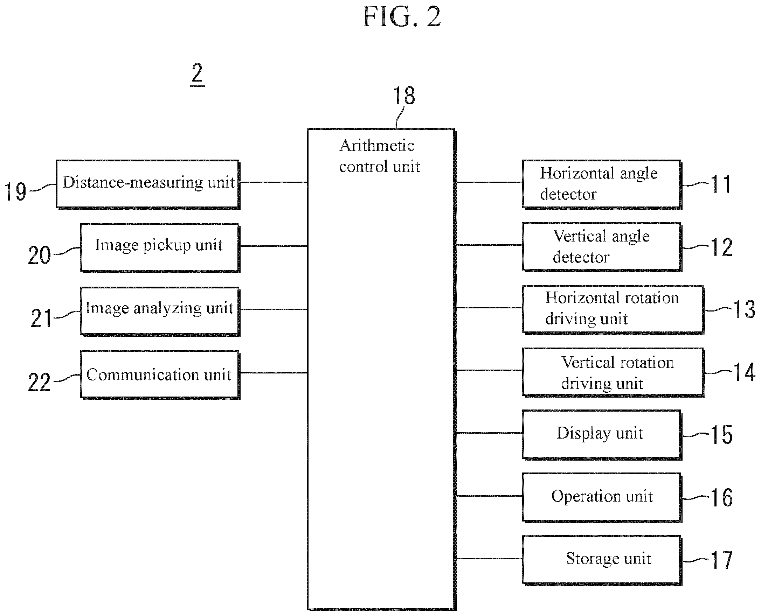

FIG. 2 is a configuration block diagram of the surveying instrument 2 according to the embodiment. The surveying instrument 2 is a total station. The surveying instrument 2 includes a horizontal angle detector 11, a vertical angle detector 12, a horizontal rotation driving unit 13, a vertical rotation driving unit 14, a display unit 15, an operation unit 16, a storage unit 17, an arithmetic control unit 18, a distance-measuring unit 19, an image pickup unit 20, an image analyzing unit 21, and a communication unit 22.

The horizontal rotation driving unit 13 and the vertical rotation driving unit 14 are motors, and are controlled by the arithmetic control unit 18. The horizontal rotation driving unit 13 rotates the bracket portion 2b in the horizontal direction, and the vertical rotation driving unit 14 rotates the telescope 2c in the vertical direction.

The horizontal angle detector 11 and the vertical angle detector 12 are encoders. The horizontal angle detector 11 measures a rotation angle of the bracket portion 2b in the horizontal direction, and the vertical angle detector 12 measures a rotation angle of the telescope 2a in the vertical direction.

The display unit 15 has a touch panel type liquid crystal display screen. In the present embodiment, as described later, a measuring operation is performed from the eyewear device 3, and the display unit 15 is therefore used for surveying which does not involve use of the eyewear device 3.

The operation unit 16 includes a power key, numeric keys, a decimal key, plus/minus keys, an enter key, and a scroll key, etc. In the present embodiment, a measuring operation is performed from the eyewear device 3, so that the operation unit 16 is used for surveying which does not involve use of the eyewear device 3.

The distance-measuring unit 19 includes a light emitting element, a light transmitting optical system, a light receiving optical system that shares optical elements with the light transmitting optical system, and a light receiving element. The distance-measuring unit 19 emits distance-measuring light such as an infrared laser to a target, and receives reflected distance-measuring light from the target by the light receiving element.

The image pickup unit 20 is a camera sensor, for example, a CCD, a CMOS sensor, or the like. A captured image is subjected to signal processing in a moving image format or a still image format. The image pickup unit 20 has an orthogonal coordinate system having an origin set to the optical axis of the distance-measuring light, and accordingly, positions of respective pixels are identified. The image pickup unit 20 is simultaneously used as a component constituting a tracking unit that automatically tracks the target, however, the tracking unit is an optional component in the present embodiment, so that description of this is omitted.

The image analyzing unit 21 extracts characteristic points of an image captured by the image pickup unit 20 and an image captured by an eyewear-side image pickup unit 32 (described later), and performs pattern matching between both images, and identifies the image captured by the eyewear-side image pickup unit 32 in the image captured by the image pickup unit 20.

The communication unit 22 enables communication with an external network, and connects to the Internet by using an Internet protocol (TCP/IP) and transmits and receives information to and from the eyewear-side communication unit 36 (described later).

The arithmetic control unit 18 is a control unit configured by mounting at least a CPU and a memory (RAM, ROM, etc.) on an integrated circuit. The arithmetic control unit 18 controls the horizontal rotation driving unit 13 and the vertical rotation driving unit 14. In the image identified by the image analyzing unit 21, the arithmetic control unit 18 also identifies a position of a visual line marker (described later), and recognizes the position of the visual line marker as a position of the target. In addition, the arithmetic control unit 18 calculates a distance measurement value to the target from a phase difference between the reflected distance-measuring light and reference light having advanced along a reference light path provided in the optical systems described above. Further, the arithmetic control unit 18 calculates an angle measurement value to the target from measurement values of the horizontal angle detector 11 and the vertical angle detector 12. In addition, the arithmetic control 18 unit executes a command from the eyewear device 3 through the communication unit 22. Details of these will be described later.

The storage unit 17 is, for example, a memory card, an HDD, or the like. In the storage unit 17, survey programs to be executed by the arithmetic control unit 18 are stored. In addition, various plural of information acquired by the arithmetic control unit 18 are recorded.

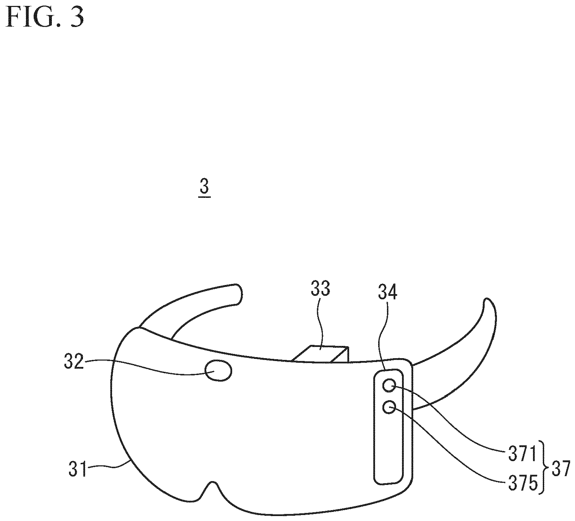

FIG. 3 is an external perspective view of the eyewear device 3 according to the embodiment. The eyewear device 3 is a wearable device to be worn on the head of the measurement operator. The eyewear device 3 includes a display 31, the eyewear-side image pickup unit 32, a visual line sensor 33, and a control unit 34. The visual line sensor 33 is provided at the rear side of the display 31 (in a direction toward the face of the measurement operator), the eyewear-side image pickup unit 32 is provided at the front side of the display 31 (in a visual line direction of the measurement operator), and the control unit 34 is provided lateral to the display 31, respectively, and at positions such that they do not obstruct the view of the measurement operator.

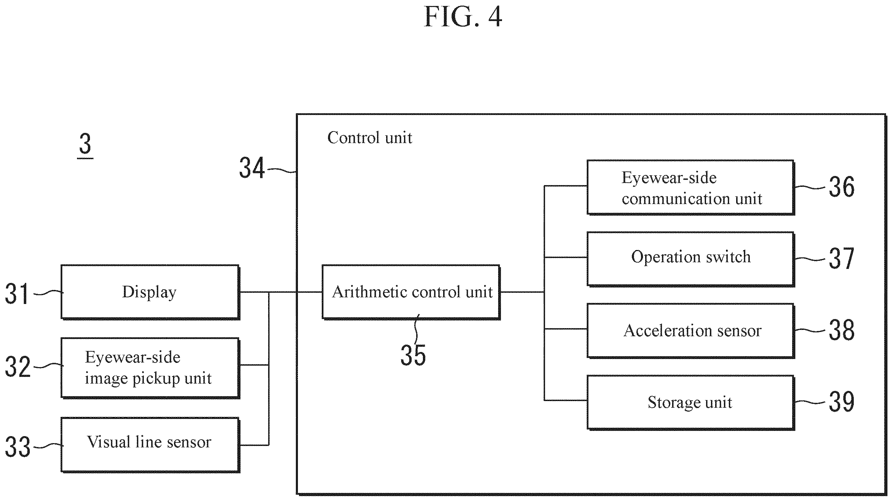

FIG. 4 is a configuration block diagram of the eyewear device 3. The eyewear device 3 includes the display 31, the eyewear-side image pickup unit 32, the visual line sensor 33, and the control unit 34, and the control unit 34 includes an arithmetic control unit 35, an eyewear-side communication unit 36, an operation switch 37, an acceleration sensor 38, and a storage unit 39.

The eyewear-side image pickup unit 32 (hereinafter, simply referred to as the image pickup unit 32) is a camera sensor such as a CCD or a CMOS sensor, and has a zoom-in function to be performed by optical or digital processing. A captured image is subjected to signal processing in either a moving image format or a still image format. In the image pickup unit 32, positions of respective pixels are identified based on an orthogonal coordinate system (camera coordinates) having an origin set to a camera center.

The display 31 is basically a see-through type that covers both eyes of the measurement operator, but may have a shape that covers one eye, or may be a non-see-through type. For example, the display 31 is an optical see-through type display using a half mirror, and the measurement operator can observe an outside view through the half mirror when measurement is not performed, and can observe an image acquired by the image pickup unit 32 when measurement is performed.

The visual line sensor 33 is a camera sensor, for example, a CCD, a CMOS sensor, or the like, and detects a visual line of the measurement operator based on a positional relationship between an eye inner corner position and an iris position obtained by a visible camera sensor, or based on a positional relationship between a corneal reflection position and a pupil position measured from reflected infrared light by an infrared camera sensor, and calculates coordinates of a position of the visual line (hereinafter, referred to as gaze point coordinates) of the measurement operator on the display 31.

The eyewear-side communication unit 36 (hereinafter, simply referred to as the communication unit 36) enables communication with an external network, and connects to the Internet by using an Internet protocol (TCP/IP) and transmits and receives information to and from the communication unit 22 of the surveying instrument 2.

The operation switch 37 includes, as illustrated in FIG. 3, a power switch 371 and a measurement switch 375. With the power switch 371, the power supply of the eyewear device 3 can be turned ON/OFF. The measurement switch 375 is operated when the measurement operator wants to measure a distance and an angle to a target.

The acceleration sensor 38 is a triaxial accelerometer. The acceleration sensor 38 detects coordinates based on a posture of the measurement operator in which the measurement operator standing upright on a ground faces the front while wearing the eyewear device 3 on his/her head, as a basic posture. The acceleration sensor 38 detects forward, rearward, leftward, and rightward tilts of the eyewear device 3 with the up-down direction being set as a Z-axis direction, the left-right direction being set as an X-axis direction, and the front-rear direction being set as a Y-axis direction of the of the eyewear device 3.

The arithmetic control unit 35 is a control unit configured by mounting at least a CPU and a memory (RAM, ROM, etc.) on an integrated circuit. The arithmetic control unit 35 displays an image captured by the image pickup unit 32 on the display 31. In addition, the arithmetic control unit 35 makes the gaze point coordinates calculated by the visual line sensor 33 correspond to the camera coordinates, and displays a visual line marker on the display 31. Further, the arithmetic control unit 35 calculates tilts from the basic posture from the coordinates in the X-axis direction, Y-axis direction, and the Z-axis direction detected by the acceleration sensor 38, and transmits the tilts to the surveying instrument 2 through the communication unit 36. When the operation switch 37 is pressed, the arithmetic control unit 35 further transmits an operation command to the surveying instrument 2 through the communication unit 36. Details of these will be described later.

The storage unit 39 is, for example, a memory card, an HDD, or the like. In the storage unit 39, processing programs to be executed by the arithmetic control unit 35 are stored.

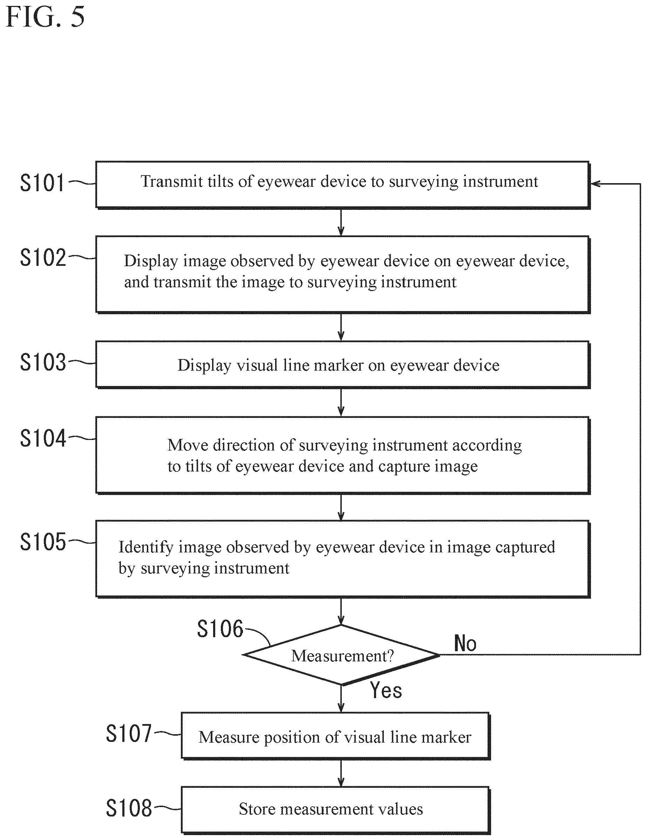

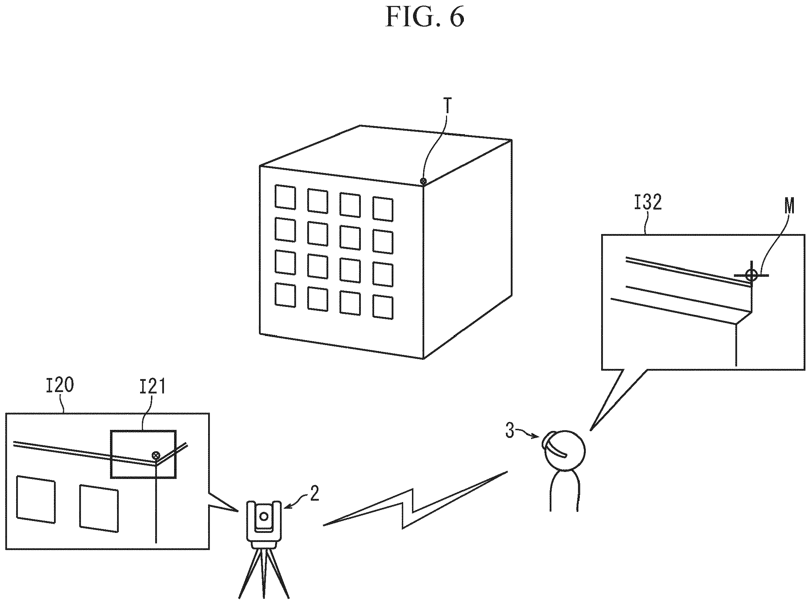

Next, a survey method using the survey system 1 is described. FIG. 5 is a measurement flowchart by the survey system 1 according to the embodiment, and FIG. 6 is an imaginary view of a measurement by the same survey system 1. It is assumed that the measurement operator measures the target (T) illustrated in FIG. 6.

As a preliminary step, the measurement operator synchronizes the surveying instrument 2 and the eyewear device 3 with each other. For example, the measurement operator wears the eyewear device 3 on his/her head and stands upright next to the surveying instrument 2, and the measurement operator and the surveying instrument 2 face the same direction or observe the same object to synchronize the surveying instrument 2 and the eyewear device 3. Thereafter, the measurement operator can start a measurement at an arbitrary position and in an arbitrary posture.

When the measurement is started, in Step S101, the eyewear device 3 calculates tilts in the X-axis, Y-axis, and Z-axis directions from the synchronized posture (basic posture) based on detection values of the acceleration sensor 38, and transmits the tilts as tilt data to the surveying instrument 2.

In Step S102, concurrently with Step S101, the eyewear device 3 displays an image (I32 in FIG. 6) captured by the image pickup unit 32 on the display 31, and transmits the image (I32) to the surveying instrument 2.

In Step S103, concurrently with Step S101, the eyewear device 3 displays a visual line marker (M in FIG. 6) on the display 31 (in image I32).

Next, the process shifts to Step S104, and the surveying instrument 2 moves a visual axis direction of the telescope 2c (that is, an emitting direction of the distance-measuring light) by operating the horizontal rotation driving unit 13 and the vertical rotation driving unit 14 in response to the tilts in the X-axis, Y-axis, and Z-axis directions received in Step S101, and captures an image in the direction toward which the visual axis direction was moved by the image pickup unit 20 to acquire an image (I20 in FIG. 6).

Next, the process shifts to Step S105, and the surveying instrument 2 performs pattern matching between the image (132) on the eyewear device 3 received in Step S102 and the image (120) captured by the surveying instrument 2 in Step S104, and identifies the image (I32) observed by the eyewear device 3 in the image (120) captured by the surveying instrument 2.

Next, the process shifts to Step S106, and when the measurement switch 375 is pressed (YES), the eyewear device 3 transmits position information of the visual line marker (M) and simultaneously issues a measurement command to the surveying instrument 2. When the measurement switch 375 is not pressed (NO), Steps S101 to S105 are repeated.

When the process shifts to Step S107, the surveying instrument 2 identifies a position of the visual line marker (M) based on the position information from the eyewear device 3 in the image (I21 in FIG. 6) identified in Step S105, and recognizes the position of the visual line marker (M) as a positon of the target (T), and emits distance-measuring light from the distance-measuring unit 19 and measures a distance to the target (T) in a direction corresponding to the visual line marker (M), and from detection values of the horizontal angle detector 11 and the vertical angle detector 12 at this time, measures an angle to the target (T). Then, the process shifts to Step S108, and the surveying instrument 2 stores the distance measurement value and the angle measurement value in the storage unit 17.

In other words, in the survey system 1, the surveying instrument 2 is controlled to face substantially the same direction as the eyewear device 3 (the direction of the measurement operator's face), and a view observed by the eyewear device 3 is identified in an image captured by the surveying instrument 2. The measurement operator may search for the target on the display 31 of the eyewear device 3 and capture the target by the visual line marker. Then, by operating the measurement switch 375 when having captured the target, in response to this operation, the surveying instrument 2 automatically measures the target in the direction corresponding to the visual line marker.

As described above, according to the survey system 1 of the present embodiment, only by searching for a target by a measurement operator on the display 31 of the eyewear device 3 with his/her eyes, the surveying instrument 2 automatically turns to the direction toward the target, and automatically identifies the target. The measurement operator at an arbitrary position and in an arbitrary posture can operate and confirm the surveying instrument 2 from the eyewear device 3 that the measurement operator wears, so that the measurement operator can perform real-time and hands-free operations.

Next, preferred modifications concerning the survey system 1 of the embodiment are described. The same components as the components described in the embodiment are provided with the same reference signs, and descriptions of these are omitted.

### (Modification 1)

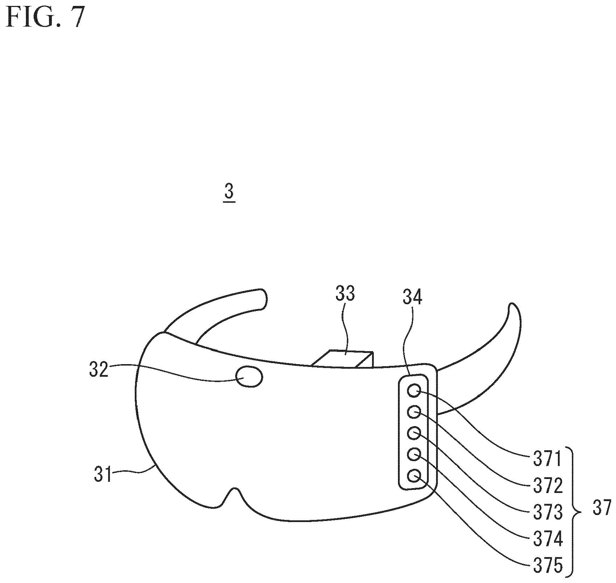

FIG. 7 is an external perspective view of an eyewear device 3 according to Modification 1. The surveying instrument 2 is the same as that of the embodiment. On the other hand, to the operation switch 37 of the eyewear device 3, a lock switch 372, a release switch 373, and a zoom switch 374 are added. The lock switch 372 is operated when the measurement operator wants to lock on to the target. The release switch 373 is operated when the measurement operator wants to release the target. The zoom switch 374 is operated when the measurement operator wants to zoom in near the target.

In Step S101 described above, when the lock switch 372 is pressed, the eyewear device 3 temporarily stops image-capturing by the image pickup unit 32, and stops the image on the display 31. When the release switch 373 is pressed, the eyewear device 3 restarts image-capturing by the image pickup unit 32, and updates the image on the display 31. When the zoom switch 374 is pressed, the eyewear device 3 changes the scaling factor of an image at the camera center, and updates the image on the display 31. According to this modification, the measurement operator can more easily search for a target.

### (Modification 2)

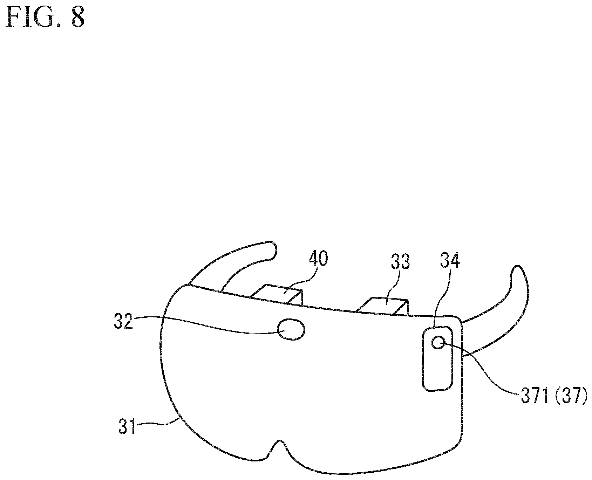

FIG. 8 is an external perspective view of an eyewear device 3 according to Modification 2. The surveying instrument 2 is the same as that of the embodiment. On the other hand, to the eyewear device 3, a blink detection camera 40 is added. The operation switch 37 is changed to include only the power switch 371. The blink detection camera 40 is provided at an inner side of the display 31 at a position so as not to obstruct the view of the measurement operator. The blink detection camera 40 detects blink motion of the measurement operator. The arithmetic control unit 35 operates in response to blinks as a trigger. For example, the arithmetic control unit 35 transmits operation commands to the surveying instrument 2 by sensing two blinks as locking-on, eye closing for 3 seconds as releasing, and three blinks as a measurement. Accordingly, the measurement operator becomes completely hands-free during measurements, and can perform measurements with greater ease.

### (Modification 3)

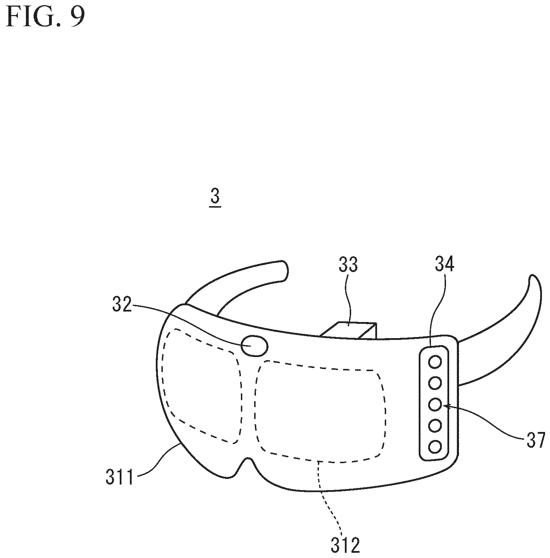

FIG. 9 is an external perspective view of an eyewear device 3 according to Modification 3. The surveying instrument 2 is the same as that of the embodiment. On the other hand, in the eyewear device 3, a display 311 for right eye and a display 312 for left eye are provided. The display 311 for the right eye is a display for displaying an image for the right eye, and is provided at a position aligning right eye of the measurement operator. The display 312 for left eye is a display for displaying an image for the left eye, and is provided at a position aligning the left eye of the measurement operator. The arithmetic control unit 35 applies image processing to an image captured by the image pickup unit 32 into an image for the left eye and an image for the right eye, and displays these as a 3D object on the display 31. Accordingly, a view captured by the image pickup unit 32 is observed as a 3D object at a position at which left and right lines of sight of the measurement operator intersect, so that the measurement operator can grasp the sense of distance to the target.

### (Modification 4)

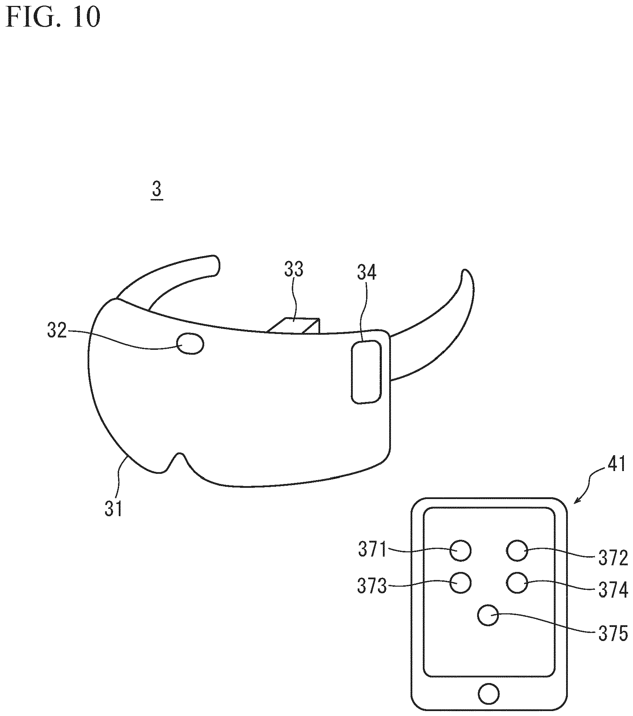

FIG. 10 is an external perspective view of an eyewear device 3 according to Modification 4. The surveying instrument 2 is the same as that of the embodiment. On the other hand, the control unit 34 of the eyewear device 3 does not include the operation switch 37. Instead, buttons corresponding to the operation switch 37 are all included in a mobile communication device 41. The mobile communication device 41 is a smartphone or a tablet terminal, and by downloading a measurement application, a power switch 371, a lock switch 372, a release switch 373, a zoom switch 374, and a measurement switch 375 are displayed. In other words, operations for turning ON/OFF the power supply of the eyewear device 3, locking-on, releasing, zooming-in, and distance and angle measurements are performed with the mobile communication device 41 in the hand of the measurement operator. Even with this modification, the measurement operator can perform measurements in an easy posture.

As other modifications, it is also preferable to provide a speaker to guide measurement operator's operations, to provide a vibration sensor to guide an operator, and/or to provide a sensor that applies electrical stimulation to the somatosensory system to guide operations, in the eyewear device 3.

In the embodiment and modifications, a measurement (distance-measuring light emission) by the surveying instrument 2 is triggered by the measurement operator' s action (operation of the measurement switch 375 or blinks), however, it is also preferable to provide a configuration such that, when there is no change in the landscape of an image for several seconds or longer in the image analyzing unit 21 of the surveying instrument 2, the arithmetic control unit 18 determines that the measurement operator has completed target collimation, and automatically starts a measurement (distance-measuring light emission).

Although embodiments and modifications of a preferred survey system and survey method according to the present invention have been described above, each embodiment and each modification can be combined based on knowledge of a person skilled in the art, and such a combined embodiment is also included in the scope of the present invention as defined by the appended claims.

### [Reference Signs List]

- 1: Survey system
- 2: Surveying instrument
- 3: Eyewear device
- 11: Horizontal angle detector (angle-measuring unit)
- 12: Vertical angle detector (angle-measuring unit)
- 13: Horizontal rotation driving unit
- 14: Vertical rotation driving unit
- 18: Arithmetic control unit
- 19: Distance-measuring unit
- 20: Image pickup unit
- 21: Image analyzing unit
- 22: Communication unit
- 31: Display
- 32: Eyewear-side image pickup unit
- 33: Visual line sensor
- 34: Control unit
- 35: Arithmetic control unit
- 36: Eyewear-side communication unit
- 37: Operation switch
- 38: Acceleration sensor
- 39: Storage unit
- 40: Blink detection camera
- 41: Mobile communication device
- 371: Power switch
- 372: Lock switch
- 373: Release switch
- 374: Zoom switch
- 375: Measurement switch
- M: Visual line marker
- T: Target

## Claims

1. A survey system (1) comprising an eyewear device (3) which is worn on the head of a measurement operator and a survey instrument (2);
**characterized in that**
the eyewear device (3) includes
an eyewear-side communication unit (36),
an acceleration sensor (38) configured to detect forward, rearward, leftward, and rightward tilts of the device (3),
an eyewear-side image pickup unit (32), including a camera, configured to capture an image in front of the device (3) and to identify positions of respective pixels based on the camera coordinates system,
a display (31) which covers an eye of the measurement operator,
a visual line sensor (33) configured to detect a gaze point of the measurement operator on the display (31) by a camera as a gaze point coordinates, and
a control unit (35) configured to display the image captured by the eyewear-side image pickup unit (32) on the display (31), to make the gaze point coordinates on the display (31) correspond to the camera coordinates, and to display the gaze point coordinates as a visual line marker (M) on the display (31), and to transmit information on the tilt data detected by the acceleration sensor (38), the image captured by the eyewear-side image pickup unit (32), and the position of the visual line marker (M) through the eyewear-side communication unit (36); and
the surveying instrument (2) includes
a communication unit (22),
a distance-measuring unit (19) configured to measure a distance to a target (T) by emitting distance-measuring light,
a drive unit (13,14) configured to turn the distance-measuring unit (19) in the horizontal direction and the vertical direction,
an angle-measuring unit (11,12) configured to measure a rotation angle in the horizontal direction and a rotation angle in the vertical direction of the distance-measuring unit (19),
an image pickup unit (20) configured to capture an image in an emitting direction of the distance-measuring light,
an image analyzing unit (21) configured to identify an image received from the eyewear device (3) through the communication unit (22) in an image captured by the image pickup unit (20), and
an arithmetic control unit (18) configured to operate the drive unit (13, 14) according to the tilt data received from the communication unit (22), to identify the position of the visual line marker (M) in the image identified by the image analyzing unit (21), and to recognize the position of the visual line marker (M) as a position of the target(T) and to measure the position of the target (T) by the distance-measuring unit (19) and the angle-measuring unit (11,12).

2. The survey system (1) according to Claim 1, wherein
the control unit (35) of the eyewear device (3) includes at least a lock switch (372) to be operated when the measurement operator wants to lock on to the target (T), a release switch (373) to be operated when the measurement operator wants to release the target (T), and a zoom switch (374) to be operated when the measurement operator wants to zoom in near the target (T) .

3. The survey system (1) according to Claim 1, wherein
the eyewear device (3) is operated by a mobile communication device (41) including at least a lock switch (372) to be operated when the measurement operator wants to lock on to the target (T), a release switch (373) to be operated when the measurement operator wants to release the target (T), and a zoom switch (374) to be operated when the measurement operator wants to zoom in near the target (T).

4. The survey system (1) according to Claim 1, wherein
the eyewear device (3) further includes a blink detection camera (40).

5. The survey system (1) according to Claim 1, wherein
the display (31) of the eyewear device (3) further includes displays for right eye and a display for left eye (311,312) .

6. A survey method using:
an eyewear device (3) which is worn on the head of a measurement operator and a survey instrument (2), the eyewear device (3) including an eyewear-side communication unit (36), an acceleration sensor (38) configured to detect forward, rearward, leftward, and rightward tilts of the device (3), an eyewear-side image pickup unit (32), including a camera, configured to capture an image in front of the device (3) and to identified positions of respective pixels based on the camera coordinates system,
a display (31) which covers an eye of the measurement operator, a visual line sensor (33) configured to detect a gaze point of the measurement operator on the display (31) by a camera as a gaze point coordinates, and a control unit (35) configured to display the image captured by the eyewear-side image pickup unit on the display (31), to make the gaze point coordinates on the display (31) correspond to the camera coordinates, and to display the gaze point coordinates as a visual line marker (M) on the display (31), and to transmit information on the tilt data detected by the acceleration sensor (38), the image captured by the eyewear-side image pickup unit (32), and the position of the visual line marker (M) through the eyewear-side communication unit (36); and
the surveying instrument (2) including a communication unit (22), a distance-measuring unit (19) configured to measure a distance to a target (T) by emitting distance-measuring light, a drive unit (13, 14) configured to turn the distance-measuring unit (19) in the horizontal direction and the vertical direction, an angle-measuring unit (11,12) configured to measure a rotation angle in the horizontal direction and a rotation angle in a vertical direction of the distance-measuring unit (19), an image pickup unit (20) configured to capture an image in an emitting direction of the distance-measuring light, an image analyzing unit (21) configured to identify the image received from the eyewear device (3) through the communication unit (22) in an image captured by the image pickup unit (20), and an arithmetic control unit (18) configured to operate the drive unit (13, 14) according to the tilt data received from the communication unit (22), to identify the position of the visual line marker (M) in the image identified by the image analyzing unit (21), and to recognize the position of the visual line marker (M) as a position of the target (T) and to measure the position of the target (T) by the distance-measuring unit (19) and the angle-measuring unit (11,12), wherein
the eyewear device (3) transmits the tilt data of the eyewear device (3) detected by the acceleration sensor (38) to the surveying instrument (2),
the surveying instrument (2) operates the drive unit (13,14) in response to the tilt data,
the eyewear device (3) displays the image captured by the eyewear-side image pickup unit (32) on the display (31), displays the visual line marker (M) on the image, and transmits the image to the surveying instrument (2), and
the surveying instrument (2) captures an image of a position as a result of movement by the drive unit (13, 14) by the image pickup unit (20), identifies the image received from the eyewear device (3) in the image captured by the image pickup unit (20), and recognizes the position of the visual line marker (M) as a position of the target (T) and measures the position of the target (T) by the distance-measuring unit (19) and the angle-measuring unit (11,12).

7. The survey method according to Claim 6, wherein
the eyewear device (3) stops image-capturing by the eyewear-side image pickup unit (32) and freeze an image when the measurement operator locks on to the target (T), updates the image of the image pickup unit (32) when the measurement operator releases the target (T), and changes the scaling factor of the image pickup unit (32) when the measurement operator zooms in near the target (T).

## Patentansprüche

1. Vermessungssystem (1), das eine Brillenvorrichtung (3) aufweist, die auf dem Kopf eines Messpersonals getragen wird, und eine Vermessungsinstrument (2);
**dadurch gekennzeichnet, dass**
die Brillenvorrichtung (3) aufweist:
eine brillenseitige Kommunikationseinheit (36),
einen Beschleunigungssensor (38), der dazu ausgebildet ist, Vorwärts-, Rückwärts-, Links- und Rechtsneigungen der Vorrichtung (3) zu detektieren,
eine brillenseitige Bildaufnahmeeinheit (32), die eine Kamera aufweist und dazu ausgebildet ist, ein Bild vor der Vorrichtung (3) zu erfassen und Positionen entsprechender Pixel basierend auf dem Kamerakoordinatensystem zu identifizieren,
eine Anzeige (31), die ein Auge des Messpersonals bedeckt,
einen Gesichtsliniensensor (33), der dazu ausgebildet ist, einen Blickpunkt des Messpersonals auf der Anzeige (31) mittels einer Kamera als Blickpunktkoordinaten zu detektieren, und
eine Steuereinheit (35), die dazu ausgebildet ist, das von der brillenseitigen Bildaufnahmeeinheit (32) erfasste Bilde auf der Anzeige (31) anzuzeigen, zu bewirken, dass die Blickpunktkoordinaten auf der Anzeige (31) den Kamerakoordinaten entsprechen, und die Blickpunktkoordinaten als eine Gesichtslinienmarkierung (M) auf der Anzeige (31) anzuzeigen, und die Informationen zu den von dem Beschleunigungssensor (38) detektierten Neigungsdaten, das von der brillenseitigen Bildaufnahmeeinheit (32) erfasste Bild und die Position der Gesichtslinienmarkierung (M) durch die brillenseitige Kommunikationseinheit (36) zu senden; und
wobei das Vermessungsinstrument (2) aufweist:
eine Kommunikationseinheit (22),
eine Entfernungsmesseinheit (19), die dazu ausgebildet ist, eine Entfernung zu einem Ziel (T) durch Aussenden von Entfernungsmesslicht zu messen, eine Antriebseinheit (13, 14), die dazu ausgebildet ist, die Entfernungsmesseinheit (19) in horizontaler Richtung und vertikaler Richtung zu drehen,
eine Winkelmesseinheit (11, 12), die dazu ausgebildet ist, einen Drehwinkel in horizontaler Richtung und einen Drehwinkel in vertikaler Richtung der Entfernungsmesseinheit (19) zu messen,
eine Bildaufnahmeeinheit (20), die dazu ausgebildet ist, ein Bild in einer Ausstrahlungsrichtung des Entfernungsmesslichts zu erfassen,
eine Bildanalyseeinheit (21), die dazu ausgebildet ist, ein von der Brillenvorrichtung (3) durch die Kommunikationseinheit (22) empfangenes Bild in einem von der Bildaufnahmeeinheit (20) erfassten Bild zu identifizieren, und eine arithmetische Steuereinheit (18), die dazu ausgebildet ist, die Antriebseinheit (13, 14) entsprechend den von der Kommunikationseinheit (22) empfangenen Neigungsdaten zu betätigen, die Position der Gesichtslinienmarkierung (M) in dem von der Bildanalyseeinheit (21) identifizierten Bild zu identifizieren, und die Position der Gesichtslinienmarkierung (M) als eine Position des Ziels (T) zu erkennen und die Position des Ziels (T) mittels der Entfernungsmesseinheit (19) und der Winkelmesseinheit (11, 12) zu messen.

2. Vermessungssystem (1) nach Anspruch 1, wobei die Steuereinheit (35) der Brillenvorrichtung (3) mindestens einen Erfassungsschalter (372), der betätigt werden soll, wenn das Messpersonal das Ziel (T) erfassen will, einen Freigabeschalter (373), der betätigt werden soll, wenn das Messpersonal das Ziel (T) freigeben will, und einen Zoom-Schalter (374) aufweist, der betätigt werden soll, wenn das Messpersonal an das Ziel (T) heranzoomen will.

3. Vermessungssystem (1) nach Anspruch 1, wobei die Brillenvorrichtung (3) von einer mobilen Kommunikationsvorrichtung (41) betätigt wird, die mindestens einen Erfassungsschalter (372), der betätigt werden soll, wenn das Messpersonal das Ziel (T) erfassen will, einen Freigabeschalter (373), der betätigt werden soll, wenn das Messpersonal das Ziel (T) freigeben will, und einen Zoom-Schalter (374) aufweist, der betätigt werden soll, wenn das Messpersonal an das Ziel (T) heranzoomen will.

4. Vermessungssystem (1) nach Anspruch 1, wobei die Brillenvorrichtung (3) ferner eine Blinzelerkennungskamera (40) aufweist.

5. Vermessungssystem (1) nach Anspruch 1, wobei die Anzeige (31) der Brillenvorrichtung (3) ferner Anzeigen für das rechte Auge und eine Anzeige für das linke Auge (311, 312) aufweist.

6. Vermessungsverfahren, das verwendet:
eine Brillenvorrichtung (3), die auf dem Kopf eines Messpersonals getragen wird, und ein Vermessungsinstrument (2),
wobei die Brillenvorrichtung (3) aufweist:
eine brillenseitige Kommunikationseinheit (36),
einen Beschleunigungssensor (38), der dazu ausgebildet ist, Vorwärts-, Rückwärts-, Links- und Rechtsneigungen der Vorrichtung (3) zu detektieren,
eine brillenseitige Bildaufnahmeeinheit (32), die eine Kamera aufweist und dazu ausgebildet ist, ein Bild vor der Vorrichtung (3) zu erfassen und Positionen entsprechender Pixel basierend auf dem Kamerakoordinatensystem zu identifizieren,
eine Anzeige (31), die ein Auge des Messpersonals bedeckt,
einen Gesichtsliniensensor (33), der dazu ausgebildet ist, einen Blickpunkt des Messpersonals auf der Anzeige (31) mittels einer Kamera als Blickpunktkoordinaten zu detektieren, und
eine Steuereinheit (35), die dazu ausgebildet ist, das von der brillenseitigen Bildaufnahmeeinheit erfasste Bilde auf der Anzeige (31) anzuzeigen, zu bewirken, dass die Blickpunktkoordinaten auf der Anzeige (31) den Kamerakoordinaten entsprechen, und die Blickpunktkoordinaten als eine Gesichtslinienmarkierung (M) auf der Anzeige (31) anzuzeigen, und die Informationen zu den von dem Beschleunigungssensor (38) detektierten Neigungsdaten, das von der brillenseitigen Bildaufnahmeeinheit (32) erfasste Bild und die Position der Gesichtslinienmarkierung (M) durch die brillenseitige Kommunikationseinheit (36) zu senden; und
wobei das Vermessungsinstrument (2) aufweist:
eine Kommunikationseinheit (22),
eine Entfernungsmesseinheit (19), die dazu ausgebildet ist, eine Entfernung zu einem Ziel (T) durch Aussenden von Entfernungsmesslicht zu messen,
eine Antriebseinheit (13, 14), die dazu ausgebildet ist, die Entfernungsmesseinheit (19) in horizontaler Richtung und vertikaler Richtung zu drehen, eine Winkelmesseinheit (11, 12), die dazu ausgebildet ist, einen Drehwinkel in horizontaler Richtung und einen Drehwinkel in vertikaler Richtung der Entfernungsmesseinheit (19) zu messen,
eine Bildaufnahmeeinheit (20), die dazu ausgebildet ist, ein Bild in einer Ausstrahlungsrichtung des Entfernungsmesslichts zu erfassen,
eine Bildanalyseeinheit (21), die dazu ausgebildet ist, ein von der Brillenvorrichtung (3) durch die Kommunikationseinheit (22) empfangenes Bild in einem von der Bildaufnahmeeinheit (20) erfassten Bild zu identifizieren, und eine arithmetische Steuereinheit (18), die dazu ausgebildet ist, die Antriebseinheit (13, 14) entsprechend den von der Kommunikationseinheit (22) empfangenen Neigungsdaten zu betätigen, die Position der Gesichtslinienmarkierung (M) in dem von der Bildanalyseeinheit (21) identifizierten Bild zu identifizieren, und die Position der Gesichtslinienmarkierung (M) als eine Position des Ziels (T) zu erkennen und die Position des Ziels (T) mittels der Entfernungsmesseinheit (19) und der Winkelmesseinheit (11, 12) zu messen, wobei die Brillenvorrichtung (3) die von dem Beschleunigungssensor (38) detektierten Neigungsdaten der Brillenvorrichtung (3) an das Vermessungsinstrument (2) sendet,
das Vermessungsinstrument (2) die Antriebseinheit (13, 14) als Reaktion auf die Neigungsdaten betätigt,
die Brillenvorrichtung (3) das von der brillenseitigen Bildaufnahmeeinheit (32) erfasste Bild auf der Anzeige (31) anzeigt, die Gesichtslinienmarkierung (M) auf dem Bild anzeigt, und das Bild an das Vermessungsinstrument (2) sendet, und
das Vermessungsinstrument (2) ein Bild einer Position als ein Ergebnis einer Bewegung durch die Antriebseinheit (13, 14) mittels der Bildaufnahmeeinheit (20) erfasst, das von der Brillenvorrichtung (3) empfangene Bild in dem von der Bildaufnahmeeinheit (20) erfassten Bild identifiziert, und die Position der Gesichtslinienmarkierung (M) als eine Position des Ziels (T) erkennt und die Position des Ziels (T) mittels der Entfernungsmesseinheit (19) und der Winkelmesseinheit (11, 12) misst.

7. Vermessungsverfahren nach Anspruch 6, wobei
die Brillenvorrichtung (3) die Bilderfassung mittels der brillenseitige Bildaufnahmeeinheit (32) stoppt und ein Bild einfriert, wenn das Messpersonal das Ziel (T) erfasst, das Bild der Bildaufnahmeeinheit (32) aktualisiert, wenn das Messpersonal das Ziel (T) freigibt, und den Skalierungsfaktor der Bildaufnahmeeinheit (32) ändert, wenn das Messpersonal an das Ziel (T) heranzoomt.

## Revendications

1. Système d'arpentage (1) comprenant un dispositif de lunettes (3) qui est porté sur la tête d'un opérateur de mesure et un instrument d'arpentage (2) ;
**caractérisé en ce que**
le dispositif de lunettes (3) inclut
une unité de communication côté lunettes (36),
un capteur d'accélération (38) configuré pour détecter des inclinaisons vers l'avant, vers l'arrière, vers la gauche et vers la droite du dispositif (3),
une unité de capture d'image côté lunettes (32), incluant un dispositif de prise de vue, configurée pour capturer une image devant le dispositif (3) et pour identifier des positions de pixels respectifs sur la base du système de coordonnées de dispositif de prise de vue,
un afficheur (31) qui recouvre un oeil de l'opérateur de mesure,
un capteur de ligne visuelle (33) configuré pour détecter un point de regard de l'opérateur de mesure sur l'afficheur (31) par un dispositif de prise de vue en tant que coordonnées de point de regard, et
une unité de commande (35) configurée pour afficher l'image capturée par l'unité de prise d'image côté lunettes (32) sur l'afficheur (31), pour faire correspondre les coordonnées de point de regard sur l'afficheur (31) aux coordonnées de dispositif de prise de vue, et pour afficher les coordonnées de point de regard en tant que marqueur de ligne visuelle (M) sur l'afficheur (31), et pour transmettre des informations sur les données d'inclinaison détectées par le capteur d'accélération (38), l'image capturée par l'unité de prise d'image côté lunettes (32), et la position du marqueur de ligne visuelle (M) par l'intermédiaire de l'unité de communication côté lunettes (36) ; et
l'instrument d'arpentage (2) inclut
une unité de communication (22),
une unité de mesure de distance (19) configurée pour mesurer une distance par rapport à une cible (T) en émettant une lumière de mesure de distance,
une unité d'entraînement (13, 14) configurée pour faire tourner l'unité de mesure de distance (19) dans la direction horizontale et la direction verticale,
une unité de mesure d'angle (11, 12) configurée pour mesurer un angle de rotation dans la direction horizontale et un angle de rotation dans la direction verticale de l'unité de mesure de distance (19),
une unité de capture d'image (20) configurée pour capturer une image dans une direction d'émission de la lumière de mesure de distance,
une unité d'analyse d'image (21) configurée pour identifier une image reçue depuis le dispositif de lunettes (3) à travers l'unité de communication (22) dans une image capturée par l'unité de capture d'image (20), et
une unité de commande arithmétique (18) configurée pour actionner l'unité d'entraînement (13, 14) en fonction des données d'inclinaison reçues depuis l'unité de communication (22), pour identifier la position du marqueur de ligne visuelle (M) dans l'image identifiée par l'unité d'analyse d'image (21), et pour reconnaître la position du marqueur de ligne visuelle (M) en tant que position de la cible (T) et pour mesurer la position de la cible (T) par l'unité de mesure de distance (19) et l'unité de mesure d'angle (11, 12).

2. Système d'arpentage (1) selon la revendication 1, dans lequel l'unité de commande (35) du dispositif de lunettes (3) inclut au moins un commutateur de verrouillage (372) devant être actionné lorsque l'opérateur de mesure souhaite verrouiller sur la cible (T), un commutateur de libération (373) devant être actionné lorsque l'opérateur de mesure souhaite libérer la cible (T), et un commutateur de zoom (374) devant être actionné lorsque l'opérateur de mesure souhaite effectuer un zoom avant près de la cible (T).

3. Système d'arpentage (1) selon la revendication 1, dans lequel
le dispositif de lunettes (3) est actionné par un dispositif de communication mobile (41) incluant au moins un commutateur de verrouillage (372) devant être actionné lorsque l'opérateur de mesure souhaite verrouiller sur la cible (T), un commutateur de libération (373) devant être actionné lorsque l'opérateur de mesure souhaite libérer la cible (T), et un commutateur de zoom (374) devant être actionné lorsque l'opérateur de mesure souhaite effectuer un zoom avant près de la cible (T).

4. Système d'arpentage (1) selon la revendication 1, dans lequel
le dispositif de lunettes (3) inclut en outre un dispositif de prise de vue de détection de clignement (40).

5. Système d'arpentage (1) selon la revendication 1, dans lequel l'afficheur (31) du dispositif de lunettes (3) inclut en outre des afficheurs pour l'oeil droit et un afficheur pour l'oeil gauche (311, 312).

6. Procédé d'arpentage utilisant :
un dispositif de lunettes (3) qui est porté sur la tête d'un opérateur de mesure et un instrument d'arpentage (2), le dispositif de lunettes (3) incluant une unité de communication côté lunettes (36), un capteur d'accélération (38) configuré pour détecter des inclinaisons vers l'avant, vers l'arrière, vers la gauche et vers la droite du dispositif (3), une unité de capture d'image côté lunettes (32), incluant un dispositif de prise de vue, configurée pour capturer une image devant le dispositif (3) et pour identifier des positions de pixels respectifs sur la base du système de coordonnées du dispositif de prise de vue,
un afficheur (31) qui recouvre un oeil de l'opérateur de mesure, un capteur de ligne visuelle (33) configuré pour détecter un point de regard de l'opérateur de mesure sur l'afficheur (31) par un dispositif de prise de vue en tant que coordonnées de point de regard, et une unité de commande (35) configurée pour afficher l'image capturée par l'unité de capture d'image côté lunettes sur l'afficheur (31), pour faire correspondre les coordonnées de point de regard sur l'afficheur (31) aux coordonnées de dispositif de prise de vue, et pour afficher les coordonnées de point de regard en tant que marqueur de ligne visuelle (M) sur l'afficheur (31), et pour transmettre des informations sur les données d'inclinaison détectées par le capteur d'accélération (38), l'image capturée par l'unité de capture d'image côté lunettes (32), et la position du marqueur de ligne visuelle (M) par l'intermédiaire de l'unité de communication côté lunettes (36) ; et
l'instrument d'arpentage (2) incluant une unité de communication (22), une unité de mesure de distance (19) configurée pour mesurer une distance par rapport à une cible (T) en émettant une lumière de mesure de distance, une unité d'entraînement (13, 14) configurée pour faire tourner l'unité de mesure de distance (19) dans la direction horizontale et la direction verticale, une unité de mesure d'angle (11, 12) configurée pour mesurer un angle de rotation dans la direction horizontale et un angle de rotation dans une direction verticale de l'unité de mesure de distance (19), une unité de capture d'image (20) configurée pour capturer une image dans une direction d'émission de la lumière de mesure de distance, une unité d'analyse d'image (21) configurée pour identifier l'image reçue par le dispositif de lunettes (3) via l'unité de communication (22) dans une image capturée par l'unité de capture d'image (20), et une unité de commande arithmétique (18) configurée pour faire fonctionner l'unité d'entraînement (13, 14) selon les données d'inclinaison reçues à partir de l'unité de communication (22), pour identifier la position du marqueur de ligne visuelle (M) dans l'image identifiée par l'unité d'analyse d'image (21), et pour reconnaître la position du marqueur de ligne visuelle (M) en tant que position de la cible (T) et pour mesurer la position de la cible (T) par l'intermédiaire de l'unité de mesure de distance (19) et de l'unité de mesure d'angle (11, 12), dans lequel
le dispositif de lunettes (3) transmet les données d'inclinaison du dispositif de lunettes (3) détectées par le capteur d'accélération (38) à l'instrument d'arpentage (2),
l'instrument d'arpentage (2) actionne l'unité d'entraînement (13, 14) en réponse aux données d'inclinaison,
le dispositif de lunettes (3) affiche l'image capturée par l'unité de capture d'image côté lunettes (32) sur l'afficheur (31), affiche le marqueur de ligne visuelle (M) sur l'image et transmet l'image à l'instrument d'arpentage (2), et
l'instrument d'arpentage (2) capture une image d'une position suite à un déplacement de l'unité d'entraînement (13, 14) par l'unité de capture d'image (20), identifie l'image reçue par le dispositif de lunettes (3) dans l'image capturée par l'unité de capture d'image (20), et reconnaît la position du marqueur de ligne visuelle (M) en tant que position de la cible (T) et mesure la position de la cible (T) par l'intermédiaire de l'unité de mesure de distance (19) et de l'unité de mesure d'angle (11, 12).

7. Procédé d'arpentage selon la revendication 6, dans lequel
le dispositif de lunettes (3) arrête la capture d'image par l'unité de capture d'image côté lunettes (32) et fige une image lorsque l'opérateur de mesure se verrouille sur la cible (T), met à jour l'image de l'unité de capture d'image (32) lorsque l'opérateur de mesure relâche la cible (T), et modifie le facteur d'échelle de l'unité de capture d'image (32) lorsque l'opérateur de mesure effectue un zoom avant près de la cible (T).
